(19) **Europäisches Patentamt**

**European Patent Office**

**Office européen des brevets**

(11) **EP 1 645 326 A1**

(12) **EUROPEAN PATENT APPLICATION**

(43) Date of publication:
**12.04.2006 Bulletin 2006/15**

(51) Int Cl.:
**B01D 61/02** (2006.01)   **C02F 1/44** (2006.01)
**B01D 69/12** (2006.01)

(21) Application number: **05021728.0**

(22) Date of filing: **05.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.10.2004 JP 2004292424**

(71) Applicant: **NITTO DENKO CORPORATION Osaka (JP)**

(72) Inventors:
• **Hiro, Atsushi**
  **Ibaraki-shi,**
  **Osaka (JP)**
• **Hirose, Masahiko**
  **Ibaraki-shi,**
  **Osaka (JP)**
• **Takata, Masakatsu**
  **Ibaraki-shi,**
  **Osaka (JP)**

(74) Representative: **Grünecker, Kinkeldey, Stockmair & Schwanhäusser Anwaltssozietät Maximilianstrasse 58 80538 München (DE)**

(54) **Reverse osmosis membrane and method for producing the same**

(57)    A reverse osmosis membrane that has alkali resistance, and therefore can maintain high boron rejection performance even at high pH region, and a method for producing the membrane are disclosed. The reverse osmosis membrane has an initial performance that a rate of change Rf (%) determined by the following equation is within ±10%:

$$Rf\ (\%) = ((F_1 - F_0)/F_0) \times 100$$

wherein $F_0$ is a permeation flux ($m^3/(m^2/day)$) at the initiation of operation when a sodium hydroxide aqueous solution adjusted to pH 12.0 as raw water is continuously circulated at 25°C under pressure of 0.75 MPa, and $F_1$ is permeation flux ($m^3/(m^2/day)$) after one week operation.

EP 1 645 326 A1

## Description

### FIELD OF THE INVENTION

The present invention relates to a reverse osmosis membrane for selectively separating components in a liquid mixture, and a method for producing the membrane. More particularly, the invention relates to a reverse osmosis membrane that has alkali resistance, and therefore can maintain high boron rejection performance even at high pH region, and a method for producing the membrane.

### BACKGROUND ART

Reverse osmosis membranes such as composite semipermeable membranes are suitable for production of pure water, desalting of brine water or seawater, or the like, and can remove and recover contamination sources or effective substances from contaminants that are generation sources of public pollution, such as dyeing waste water or electrodeposition paint waste water. This contributes to closed system of drainage. Further, the reverse osmosis membranes can be used in advanced treatments such as condensation cleaning of effective components in food applications, or removal of harmful components in sewerage applications.

Composite reverse osmosis membranes comprising a porous support having formed thereon a thin film having heterogeneously selective separability have conventionally been known as reverse osmosis membranes having a structure different from that of asymmetric reverse osmosis membranes. At present, various reverse osmosis membranes comprising a support having formed thereon a thin film comprising a polyamide obtained by interfacial polymerization of a polyfunctional aromatic amine and a polyfunctional aromatic acid halide are proposed as described in, for example, JP-A-55-147106, JP-A-62-121603, JP-A-63-218208 and JP-A-2-187135. Further, composite reverse osmosis membranes comprising a support having formed thereon a thin film obtained by interfacial polymerization of a polyfunctional aromatic amine and a polyfunctional alicyclic acid halide are proposed as described in, for example, JP-A-61-42308.

In water desalination plants using reverse osmosis membranes, further advanced desalting performance and water permeability are required in order to further reduce running cost. To meet this requirement, a method has conventionally been known comprising treating an aqueous solution containing chlorine by contacting the solution with a composite reverse osmosis membrane having a crosslinked polyamide polymer as a separation active layer, as described in, for example, JP-B-63-63803, JP-B-5-1051, JP-A-5-329344 and JP-A-2000-334280. In recent years, attempt is made to convert seawater into freshwater using such composite reverse osmosis membranes. Seawater contains relatively a large amount of boron, and it is desired to reduce boron concentration of permeated water up to a boron concentration suitable for drinking water.

Conventional method for reducing boron concentration is a method of further treating product water desalted with a reverse osmosis membrane for converting seawater into freshwater, with a ultralow pressure reverse osmosis membrane as described in, for example, US 6,537,456B2 and US 2002-153319A1. In the case of treatment method with two-stage reverse osmosis membrane, water supplied to a second-stage reverse osmosis membrane which is difficult to general hard component scale is made to have high pH region. This enables the degree of dissolution of boron to be high, and as a result, boron is present in ion state. In ion state, boron has large radius of hydration and therefore is difficult to permeate through a membrane. Further, removal effect is increased by charge repulsion of a reverse osmosis membrane, thereby boron rejection in the reverse osmosis membrane is further increased.

However, In the case of treatment method with two-stage reverse osmosis membrane as described above, where water supplied to the second stage has high pH region, there is the problem that boron rejection performance deteriorates at the initial stage in the conventional ultralow pressure reverse osmosis membrane.

### SUMMARY OF THE INVENTION

Accordingly. One object of the present invention is to provide a reverse osmosis membrane that has alkali resistance, and therefore can maintain high boron rejection performance even at high pH region.

Another object of the present invention is to provide a method for producing the membrane.

As a result of extensive investigations to achieve the above objects, it has been found that a reverse osmosis membrane having small rate of change in permeation flux to an alkali aqueous solution can maintain high boron rejection performance even at high pH region. The present invention has been completed based on this finding.

The reverse osmosis membrane according to the present invention has an initial performance that a rate of change Rf (%) determined by the following equation is within $\pm 10\%$.

$$Rf\,(\%) = ((F_1 - F_0)/F_0) \times 100$$

wherein $F_0$ is a permeation flux ($m^3/(m^2/day)$) at the initiation of operation when a sodium hydroxide aqueous solution adjusted to pH 12.0 as raw water is continuously circulated at 25°C under pressure of 0.75 MPa, and $F_1$ is permeation flux ($m^3/(m^2/day)$) after one week operation.

According to the reverse osmosis membrane, the rate of change in permeation flux to an alkali aqueous solution is small. As a result, the membrane can maintain high boron rejection performance even at high pH region.

Such a reverse osmosis membrane can be obtained by contacting an aqueous solution having hydrogen ion concentration of pH 9-13 with the membrane. By contacting such an aqueous solution, the membrane exhibits alkali resistance, and can maintain high boron rejection performance even at high pH region.

In a preferred embodiment, the reverse osmosis membrane is a composite semipermeable membrane comprising a porous support having formed thereon a separation active layer comprising a crosslinked polyamide polymer. The separation active layer comprising a crosslinked polyamide polymer has relatively high salt rejection performance, and therefore the composite semipermeable membrane can maintain high boron rejection performance particularly at high pH region.

The method for producing the reverse osmosis membrane according to the present invention comprises a step of contacting an aqueous solution having hydrogen ion concentration of pH 9-13 with a reverse osmosis membrane. Such a contact step enables the rate of change in permeation flux to an alkali aqueous solution to be small, thereby an alkali resistance is developed. As a result, the reverse osmosis membrane thus treated can maintain high boron rejection performance even at high pH region.

## DETAILED DESCRIPTION OF THE INVENTION

The present invention is described in detail below.

The reverse osmosis membrane according to the present invention has an initial performance that a rate of change Rf (%) determined by the following equation is within ±10%:

$$Rf\,(\%) = ((F_1 - F_0)/F_0) \times 100$$

wherein $F_0$ is a permeation flux ($m^3/(m^2/day)$) at the initiation of operation when a sodium hydroxide aqueous solution adjusted to pH 12.0 as raw water is continuously circulated at 25°C under pressure of 0.75 MPa, and $F_1$ is permeation flux ($m^3/(m^2/day)$) after one week operation.

Where the rate of change Rf (%) is fallen outside the range of ±10%, the membrane has poor alkali resistance, and therefore cannot maintain high boron rejection performance at high pH region. Thus, the rate of change Rf (%) is within a range of ±10%, preferably ±5%.

The reverse osmosis membrane according to the present invention may be an asymmetric membrane in which asymmetric structures are formed of the same material by a phase separation method or the like, or a composite semipermeable membrane comprising a porous support having formed thereon a thin film having selective separability using a different material.

Examples of the material for forming the asymmetric membrane include cellulose acetate, polyether, crosslinked aramide, silicon and synthetic polymer.

The reverse osmosis membrane is preferably a composite semipermeable membrane comprising a porous support having formed thereon a separation active layer, more preferably a composite semipermeable membrane comprising a porous support having formed thereon a separation active layer comprising a crosslinked polyamide polymer. It is further preferable that the separation active layer is a thin film comprising as the main component a polyamide having structural units obtained by a condensation reaction of an amine component and divalent or more polyfunctional acid halide.

The amine component is a polyfunctional amine having at least two reactive amino groups, and includes aromatic, aliphatic or alicyclic polyfunctional amines. Examples of the aromatic polyfunctional amine include m-phenylenediamine, p-phenylenediamine, 1,3,5-triaminobenzene, 1,2,4-triaminobenzene, 3,5-diaminobenzoic acid, 2,4-diaminotoluene, 2,4-diaminoanisole, amidole and xylenediamine. Examples of the aliphatic polyfuncional amine include ethylenediamine, propylenediamine and tris(2-aminoethyl)amine. Examples of the alicyclic polyfunctional mine include 1,3-diaminocyclohexane, 1,2-diaminocyclohexane, 1,4-diaminocyclohexane, piperazine, 2,5-dimethylpiperazine and 4-aminomethylpiperazine. Those polyfunctional amines may be used alone or as mixtures of two or more thereof.

The divalent or more polyfunctional acid halides are aromatic, aliphatic or alicyclic polyfunctional acid halides. Examples of the aromatic polyfunctional acid halide include trimesic chloride, terephthalic chloride, isophthalic chloride, biphenyldicarboxylic chloride, naphthalenedicarboxylic chloride, benzenetrisulfonic chloride, benzenedisulfonic chloride and chlorosulfonylbenzenedicarboxylic chloride. Examples of the aliphatic polyfunctional acid halide include propanedicarboxylic chloride, butanedicarboxylic chloride, pentanedicarboxylic chloride, propanetricarboxylic chloride, butanetricarboxylic chloride, pentanetricarboxylic chloride, glutaryl halide and adipoyl halide. Examples of the alicyclic polyfuncitonal acid halide include cyclopropanetricarboxylic chloride, cyclobutanetetracarboxylic chloride, cyclopentanetricarboxylic chloride, cyclopentanetetracarboxylic chloride, cyclohexanetricarboxylix chloride, tetrahydrofurantetracarboxylic chloride, cyclopentanedicarboxylic chloride, cyclobutanedicarboxylic chloride, cyclohexanedicarboxylic chloride and tetrahydrofurandicarboxylic chloride. Those polyfunctional acid halides may be used alone or as mixtures of two or more thereof

The polyfunctional acid halide used in the present invention preferably contains trivalent or more polyfunctional acid halides in order to obtain a thin film of a crosslinked polyamide polymer having good salt rejection performance.

Further, to improve performance of a thin film containing polyamide, polymers such as polyvinyl alcohol, polyvinyl pyrrolidone or polyacrylic acid, polyhydric alcohols such as sorbitol or glycerin, and the like may be copolymerized.

The thin film (separation active layer) has a thickness of preferably 0.01-100 $\mu$m, more preferably 0.1-10 $\mu$m, although varying depending on the production method of the film or the like. Small thickness is excellent in the point of permeation flux. However, the thickness is too small, mechanical strength of the thin film deteriorates and defects are liable to cause. As a result, there is the tendency of adversely affecting salt rejection performance.

The porous support membrane supporting the thin film, used in the present invention is not particularly limited so long as it can support the thin film. Examples of the porous support membrane include polysulfones, polyarylether sulfones such as polyether sulfone, polyimides and polyvinylidene fluorides. A porous support membrane comprising polysulfone or polyarylether sulfone is preferably used from the point that such a membrane is chemically, mechanically and thermally stable. The porous support membrane has a thickness of generally about 25-125 $\mu$m, preferably about 40-75 $\mu$m, but the thickness is not always limited to those ranges.

The porous support membrane may have a symmetric structure or an asymmetric structure. The asymmetric structure is preferable in the point of achieving both of support function and liquid permeability of the thin film. The porous support membrane has an average pore diameter of preferably 1-1,000 nm on the film formation side surface thereof

In forming the thin film on the porous support membrane in the present invention, the formation method is not particularly limited, and can use any conventional methods. For example, interfacial condensation method, phase separation method or thin film coating method can be used. Of those, the interfacial condensation method is preferable, which comprises applying an aqueous solution containing an amide component on the porous support membrane, and contacting the porous support membrane with a non-aqueous solution containing polyfuctional acid halide, thereby forming a thin film on the porous support membrane. Details of conditions or the like of such an interfacial condensation method are described in, for example, JP-A-58-24303 and JP-A-1-180208. Those techniques can appropriately be employed in the present invention.

Various reagents can be present in the reaction field for the purpose of facilitating film formation or improving performance of a composite semipermeable membrane obtained. Examples of the reagents include polymers such as polyvinyl alcohol, polyvinyl pyrrolidone or polyacrylic acid, polyhydric alcohols such as sorbitol or glycerin, amine salts such as tetraalkylammonium halide or a salt of trialkyl ammonium and an organic acid, as described in JP-A-2-187135, surfactants such as sodium dodecylbenzene sulfonate, sodium dodecylsulfate or sodium laurylsulfate, sodium hydroxide capable of removing hydrogen halide formed in a polycondensation reaction, trisodium phosphate, triethylamine, camphorsulfonic acid, conventional acylation catalysts, and compounds having solubility parameter of 8-14 $(cal/cm^3)^{1/2}$ described in JP-A-8-224452.

The method for producing the reverse osmosis membrane according to the present invention comprises a step of contacting an aqueous solution having hydrogen ion concentration of pH 9-13 with the reverse osmosis membrane obtained above. The reverse osmosis membrane of the present invention is preferably obtained by contacting an aqueous solution having hydrogen ion concentration of pH 9-13.

Where the alkali aqueous solution has pH of lower than 9, the rate of change (Rf) of initial flux increases, and as a result, boron rejection performance decreases. On the other hand, where the alkali aqueous solution has pH exceeding 13, great reduction in the rate of change (Rf) of initial flux is not expected, which is not economical. Reversely, there is the possibility that deterioration occurs in the membrane and desalting performance rapidly decreases. From those standpoints, the hydrogen ion concentration of the alkali aqueous solution is preferably pH 11.0-12.5.

Alkali used to control hydrogen ion concentration is not particularly limited so long as it is water-soluble. Examples of the alkali used include alkali metal hydroxides such as sodium hydroxide or potassium hydroxide, alkaline earth metal hydroxides such as calcium hydroxide, ammonia and amines. Of those, alkali metal hydroxide, particularly sodium hydroxide, is preferably from the standpoints of easy handleability and easy availability.

A method of contacting the aqueous solution with the reverse osmosis membrane can use various methods such as dipping, pressure flow, spraying, coating or showering. Dipping or pressure flow is preferable to give sufficient effect by contacting.

In conducting contact of the aqueous solution by the pressure flow method, pressure supplying the aqueous solution to the reverse osmosis membrane is not particularly limited within a range that allows physical strength of the reverse osmosis membrane and members or facilities for giving pressure. However, the contact is conducted under pressure of preferably 0.1-10 MPa, more preferably 1.5-7.5 MPa. Where the pressure is less than 0.1 MPa, contact time tends to prolong when it is tried to obtain the desired effect. On the other hand, where the pressure exceeds 10 MPa, the permeation amount tends to decrease by compaction.

The contact time is not particularly limited within a range that can obtain the desired effect and can be allowed on the production, and optional contact time can be set. However, the contact time is preferably several seconds to 2 hours, more preferably 10 seconds to 1 hour. The contact temperature is not particularly limited so long as the aqueous solution can be present as a liquid. However, the contact temperature is preferably 10-90°C from the standpoints of heat resistance of materials and easy handleability.

In conducting the contacting step, the reverse osmosis membrane is not particularly limited on its shape. In other words, the membrane can be subjected to the contact treatment in any possible shape such as flat shape or spiral element shape.

The reverse osmosis membrane of the present invention can maintain high boron rejection performance even at high pH region. Specifically, when a sodium hydroxide aqueous solution adjusted to pH 12.0 as raw water is continuously circulated at 25°C under pressure of 0.75 MPa for one week, a solution obtained by adding 10 mg/liter of boron to 0.05% sodium chloride aqueous solution, as raw water is subjected to membrane separation at liquid temperature of 25°C at pH of 9.5 under pressure of 0.74 MPa in flow rate of condensed water of 20 liters/min before and after the separation operation. Difference in boron rejection before and after the separation is preferably 0-10%, more preferably 0-5%.

The reverse osmosis membrane of the present invention can also be suitably used at pH 2-10.

The present invention is described in more detail by reference to the following Example, but it should be understood that the invention is not construed as being limited thereto.

## EXAMPLE

A sodium hydroxide aqueous solution adjusted to pH 12 was prepared as a treating solution. Ultralow pressure reverse osmosis membrane spiral element ES20-D4 manufactured by Nitto Denko Corporation (a composite semipermeable membrane comprising a porous support having provided thereon a separation active layer comprising a crosslinked polyamide polymer as a main component) was subjected to pressure flow operation at 25°C under pressure of 1.5 MPa for 30 minutes using the treating solution. This module was subjected to continuous circulation operation under pressure of 0.74 MPa for one week using the sodium hydroxide aqueous solution (pH 12). As a result, the rate of change (Rf) of initial flux was 0.0%.

On the other hand, before and after the above one week continuous circulation operation, performance evaluation was conducted using a solution obtained by adding 10 mg/liter of boron to 0.05% sodium chloride aqueous solution as raw water under constant conditions of water temperature 25°C, pH 9.5, pressure 0.74 MPa and concentrated water flow rate 20 liters/min. As a result, boron rejection before continuous circulation operation was 83%, and boron rejection after continuous circulation operation was 83%.

## COMPARATIVE EXAMPLE

A sodium hypochlorite aqueous solution (pH 8) was prepared as a treating solution. The same type of the ultralow pressure reverse osmosis membrane spiral element ES20-D4 used in the Example was subjected to pressure flow operation at 25°C under pressure of 1.5 MPa for 30 minutes using the treating solution. This module was subjected to continuous circulation operation under pressure of 0.70 MPa for one week using the sodium hydroxide aqueous solution (pH 12). As a result, the rate of change (Rf) of initial flux was 11%.

On the other hand, before and after the above one week continuous circulation operation, performance evaluation was conducted using a solution obtained by adding 10 mg/liter of boron to 0.05% sodium chloride aqueous solution as raw water under constant conditions of water temperature 25°C, pH 9.5, pressure 0.74 MPa and concentrated water flow rate 20 liters/min. As a result, boron rejection before continuous circulation operation was 84%, and boron rejection after continuous circulation operation was 74%.

It should further be apparent to those skilled in the art that various changes in form and detail of the invention as shown and described above may be made. It is intended that such changes be included within the spirit and scope of the claims appended hereto.

This application is based on Japanese Patent Application No. 2004-292424 filed October 5, 2004, the disclosure of which is incorporated herein by reference in its entirety.

**Claims**

1. A reverse osmosis membrane having an initial performance that a rate of change Rf (%) determined by the following equation is within $\pm 10\%$:

$$Rf\,(\%) = ((F_1 - F_0)/F_0) \times 100$$

wherein $F_0$ is a permeation flux ($m^3/(m^2/day)$) at the initiation of operation when a sodium hydroxide aqueous solution adjusted to pH 12.0 as raw water is continuously circulated at 25°C under pressure of 0.75 MPa, and $F_1$ is permeation flux ($m^3/(m^2/day)$) after one week operation.

2. The reverse osmosis membrane as claimed in claim 1, obtained by contacting with an aqueous solution having hydrogen ion concentration of pH 9-13.

3. The reverse osmosis membrane as claimed in claim 1, comprising a porous support having formed thereon a separation active membrane comprising a crosslinked polyamide polymer.

4. The reverse osmosis membrane as claimed in claim 2, comprising a porous support having formed thereon a separation active membrane comprising a crosslinked polyamide polymer.

5. A method for producing a reverse osmosis membrane, comprising a step of contacting an aqueous solution having hydrogen ion concentration of pH 9-13 with a reverse osmosis membrane.

**European Patent Office**

**EUROPEAN SEARCH REPORT**

Application Number

EP 05 02 1728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 250 185 A (TEXACO INC.) 5 October 1993 (1993-10-05) * column 3, line 17 - line 37; claims 1-9 * ----- | 1-5 | B01D61/02 C02F1/44 B01D69/12 |
| X | US 2002/108900 A1 (M. HIROSE ET AL.) 15 August 2002 (2002-08-15) * paragraph [0038]; claims 1-20 * ----- | 1-5 | |
| X,D | DATABASE WPI Week 200112 Derwent Publications Ltd., London, GB; AN 2001-107043 XP002355860 & JP 2000 334280 A (NITTO DENKO CORP.) 5 December 2000 (2000-12-05) * abstract * ----- | 1-5 | |
| | | | TECHNICAL FIELDS SEARCHED (IPC) B01D C02F |

The present search report has been drawn up for all claims

| Place of search | Date of completion of the search | Examiner |
|---|---|---|
| Munich | 24 November 2005 | Luethe, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 05 02 1728

This annex lists the patent family members relating to the patent documents cited in  the above-mentioned European search report.
The members are as contained in the European Patent Office EDP file on
The European Patent Office is in no way liable for these particulars which are merely  given for the purpose of information.

24-11-2005

| Patent document cited in search report | | Publication date | Patent family member(s) | | Publication date |
|---|---|---|---|---|---|
| US 5250185 | A | 05-10-1993 | NONE | | |
| US 2002108900 | A1 | 15-08-2002 | AT<br>DE<br>EP<br>WO<br>JP | 303857 T<br>60206038 D1<br>1392410 A2<br>02064509 A2<br>2004518531 T | 15-09-2005<br>13-10-2005<br>03-03-2004<br>22-08-2002<br>24-06-2004 |
| JP 2000334280 | A | 05-12-2000 | NONE | | |

EPO FORM P0459

For more details about this annex : see Official Journal of the European Patent Office, No. 12/82